## Europäisches Patentamt
## European Patent Office
## Office européen des brevets

(11) Veröffentlichungsnummer: **0 188 801**
**B1**

(12) **EUROPÄISCHE PATENTSCHRIFT**

(45) Veröffentlichungstag der Patentschrift:
29.11.89

(21) Anmeldenummer: 85116464.0

(22) Anmeldetag: 23.12.85

(51) Int. Cl.⁴: **H 02 K 5/167, H 02 K 23/40, H 02 K 23/56**

(54) Elektrokleinmotor mit einem einstückigen Lagertragteil.

(30) Priorität: 22.12.84 CH 6135/84

(43) Veröffentlichungstag der Anmeldung:
30.07.86 Patentblatt 86/31

(45) Bekanntmachung des Hinweises auf die Patenterteilung:
29.11.89 Patentblatt 89/48

(84) Benannte Vertragsstaaten:
AT BE CH DE FR GB IT LI LU NL SE

(56) Entgegenhaltungen:
EP-A- 0 066 643
CH-A- 424 954
CH-A- 623 965
DE-C- 1 023 515
GB-A- 1 532 999
GB-A- 2 135 833
US-A- 2 827 579
US-A- 3 418 505
US-A- 4 559 461

PATENT ABSTRACTS OF JAPAN, Band 5, Nr. 181
(E-83)[853], 20. November 1981; & JP - A - 56 107 772
(NIPPON DENSO K.K.) 26.08.1981

(73) Patentinhaber: PAPST-MOTOREN GmbH & Co. KG,
Postfach 1435, D-7742 St. Georgen 1 Schwarzwald (DE)

(72) Erfinder: Elsässer, Dieter, Bundesstrasse 1, D-7742 St.
Georgen/Schwarzwald (DE)
Erfinder: Zuckschwert, Edgar,
Johann-Sebastian-Bach-Strasse 10a, D-7742 St.
Georgen/Schwarzwald (DE)

(74) Vertreter: Strasse, Joachim, Dipl.-Ing. et al, Strasse und
Stoffregen European Patent Attorneys
Zweibrückenstrasse 17, D-8000 München 2 (DE)

ACTORUM AG

## Beschreibung

Die Erfindung betrifft einen Elektrokleinmotor mit einem einstückigen Lagertragteil, wobei das Lagertragteil selbst zum magnetischen Rückschluss dient.

Solche Motoren weisen in der Mehrzahl Befestigungs-Flansche mit daran befestigten Lagerrohren auf. Es sind auch Motoren mit einstückigem Lagertragteil (Flansch+Lagerrohr) bekannt, z.B. DE-A-31 18 289 und DE-A-33 40 292.

Die DE-A-1 023 515 beschreibt Generatoren bzw. Motoren mit selbsttragenden Wicklungen, zwischen deren Windungen ein magnetisch leitendes Material geringer elektrischer Leitfähigkeit eingefügt ist.

Die CH-A-424 954 beschreibt ebenfalls Motoren, bei denen bei den Statoren und Rotoren magnetisch leitendes Material verwandt wird.

Aufgabe der Erfindung ist, diese Lagertragteile so auszubilden, dass sie billiger und einfacher herstellbar sind. Die Lösung der vorliegenden Aufgabe ist im kennzeichnenden Teil des Anspruchs 1 angegeben.

Es zeigen:

Fig. 1: Ein nicht zur Erfindung gehörender Motor im Schnitt,

Fig. 2: ein Ausführungsbeispiel eines erfindungsgemässen Motors im Schnitt,

Fig. 3: eine Draufsicht auf eine Stirnseite auf ein erfindungsgemässes Lagertragteil und

Fig. 4: ein Schnitt entlang der Linie IV–IV in Fig. 3.

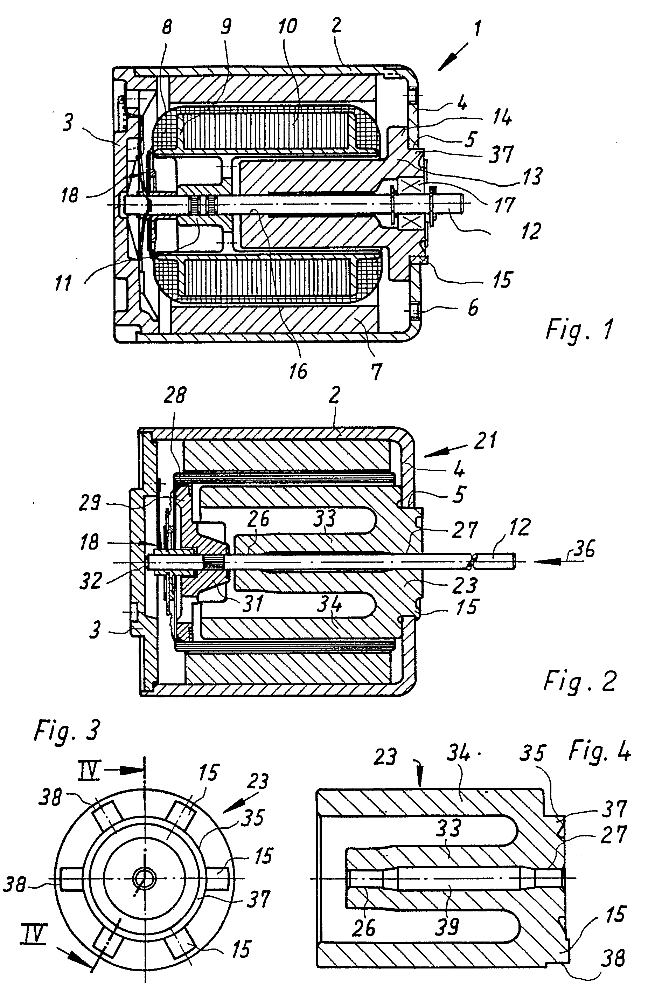

Fig. 1 zeigt im Schnitt einen Kleinmotor 1 mit einem Aussengehäuse 2, das topfförmig und auf der offenen Seite durch einen Deckel 3 abgedeckt ist. Der Topfboden 4 des Gehäuses 2 enthält eine zentrische Ausnehmung 5 sowie am äusseren Topfbodenrand Befestigungsbohrungen 6.

An der zylindrischen Innenwand des Gehäuses 2 ist ein Permanentmagnet 7 befestigt. Dieser Magnet 7 umgibt eine Wicklung 8 des Rotors und hat etwa die gleiche axiale Länge wie dieser. Der Rotor besteht aus einem Träger 9, der auf seinem Aussenmantel Eisenbleche 10 und die Wicklung 8 aufnimmt. Der Träger 9 ist im wesentlichen rohrförmig ausgebildet und enthält im radial inneren Bereich eine koaxiale Nabe 11, in der eine Rotorwelle 12 festgemacht ist.

In der Ausnehmung 5 des Gehäuses 2 ist ein Zentrieransatz 35 des Lagertragteils 13 befestigt. Dieses Tragteil 13 ist vorzugsweise einteilig im Sinter-Verfahren hergestellt. Im Ausführungsbeispiel ist die am Topfboden 4 befestigte Seite des Tragteils 13 als Flansch 14 ausgeformt, der einen in die Ausnehmung 5 passenden Zentrieransatz 35 mit Zentriernasen 15 enthält. Eine Lagerbohrung 16 ist in diesem axialen Bereich im Durchmesser vergrössert zur Aufnahme eines Kugellagers 17. Auf dem axial gegenüberliegenden Ende weist die Lagerbohrung 16 über eine geringe axiale Länge einen Durchmesser auf, der einen leichten Lauf der Welle 12 ergibt, während der übrige axiale Teil einen grösseren Durchmesser als die Welle aufweist. Als Material für diesen Gleitlagerteil des Tragteils 13, wird vorzugsweise Sinterbronze verwendet.

Das Tragteil 13 kann statt des Kugellagers 17 auch ein zweites Gleitlager beinhalten. Das aus Sinterbronze hergestellte Tragteil 13 hat eine grosse Speicherkapazität für das Schmiermittel. Das Tragteil 13 kann auch gleichzeitig Motorflansch sein, so dass das Aussengehäuse 2 als äusserer Rückschluss ausgebildet ist, d.h. dass auch noch das Aussengehäuse einstückig mit dem Tragteil 13 ausgebildet ist (vgl. DE-A-1 023 515).

Fig. 2 zeigt als Ausführungsbeispiel gemäss der Erfindung einen Kleinmotor 21 mit ähnlichem Aufbau wie im Beispiel gemäss Fig. 1. Statt der eisenbehafteten Wicklung S ist hier eine eisenlose Wicklung 28 an einem Träger 29 befestigt. Der Träger 29 ist im wesentlichen scheibenförmig mit einem Ansatz 31, der eine durchgehende Bohrung enthält, in der die Welle 12 befestigt ist. Die an einem axialen Ende der Welle 12 angeformte Kuppe 32 läuft gegen den Deckel 3. Tragteil 23 ist einstückig im Sinterverfahren hergestellt wie das Tragteil 13 in Fig. 1. Der Sinterwerkstoff besteht hier allerdings aus ferromagnetischem Material. Um einen guten magnetischen Rückschluss zu gewährleisten, weist ein äusserer Mantel 34 des Tragteils 23 die grösstmögliche axiale Länge auf, die konstruktiv erreichbar ist. Deshalb ist auch der Träger 29 axial sehr kompakt ausgebildet. Eine innere Nabe 33 erstreckt sich axial über den wesentlichen Teil der Welle 12, die in dieser Nabe ausgebildeten Lagern 26, 27 läuft. Dabei kann eines der beiden Lager (z.B. 27) als Kugellager, beide als Gleitlager oder als Kugellager ausgebildet sein, je nach Anwendungsfall. An den Lagerstellen 26, 27 können auch Lager aus hochwertigem Sintermaterial eingesetzt werden.

In beiden vorbeschriebenen Motoren ist das Tragteil 13, 23 einstückig aus Sintermaterial gefertigt und enthält ein Lager 16, 26 und – da aus einem Werkzeug – einen exakt zu diesem Lager 16, 26 fluchtend gegenüberliegenden Lagersitz für ein zweites Lager 17, 27, z.B. aus hochwertigerem Sintermaterial bzw. für ein Kugellager.

Die Ausbildung eines gezeigten Kollektors 18 gehört nicht zu dieser Erfindung und wird deshalb auch nicht näher beschrieben.

In Fig. 3 ist das Tragteil 23 in einer Ansicht in Richtung eines Pfeiles 36 in Fig. 2 dargestellt. Darin sind besonders die Zentriernasen 15 gut zu sehen, die umfangsmässig am Zentrieransatz 35 in gleichem Abstand (vorzugsweise sechs) verteilt angeordnet sind. Das Tragteil 23 soll an dieser Stelle zwei Funktionen erfüllen, zum einen ist eine preiswerte Verbindung mit dem Gehäuse 2 herzustellen und zum anderen ist eine Zentrierung des Motors 1, 21 zu schaffen. Ein Stauchrand 37 ist im Umfangsbereich zwischen den Zentriernasen 15 mit dem Topfboden 4 des Gehäuses 2 verstaucht, während die Zentriernasen 15 an ihren Umfangsflächen 38 vom Stauchvorgang unberührt bleiben und so zur Zentrierung bei der Montage des Motors 1, 21 in einem Gerät dienen. Der Zentrieransatz 35 und die Zentriernasen 15 sind preisneutral im Sinterpresswerkzeug enthalten.

Fig. 4 zeigt einen Schnitt entlang der Linie IV–IV in Fig. 3 durch das erfindungsgemässe Tragteil 23, das hier auch noch als magnetisches Rückschlussteil für den Motor dient. Zwischen den Lagern 26 und 27 ist eine durchgehende Bohrung 39 vorgesehen, deren Durchmesser grösser als der der beiden Lager 26, 27 ist.

Die im Sinterverfahren hergestellten Lagertragteile bieten einen sehr grossen Schmiermitteldepotraum.

Die Ausführung eines Motors gemäss der Erfindung ist auch als Aussenläufermotor denkbar. Darin nimmt der Aussenmantel des einstückigen Lagertragteils eine eisenlose Wicklung auf, wobei wie in obigen Beispielen auch hier die Lager, bzw. die Lagersitze sowie ein Zentrieransatz genau fluchtend zueinander aus dem Sinterpresswerkzeug fallen und die Lager und das Lagertragteil ohne Nacharbeit montierbar sind.

## Patentansprüche

1. Elektrokleinmotor mit einem einstückigen Lagerteil (23), wobei das Lagertragteil selbst zum magnetischen Rückschluss auf einer Seite des Luftspaltes dient, dadurch gekennzeichnet, dass es als Sinterteil aus ferromagnetischem Material hergestellt ist, das die Form eines einseitig offenen Hohlzylinders aufweist, dessen äussere Mantelfläche (34) vom Läufer des Elektromotors umgeben ist und der an seiner geschlossenen Stirnfläche eine konzentrische, in den Hohlraum ragende Nabe (33) umfasst, die bereits mindestens eine einstückig mit dem Lagertragteil ausgebildete Sinterlagerfläche (16, 26) zur Lagerung der Rotorwelle (12) enthält.

2. Elektrokleinmotor nach Anspruch 1, dadurch gekennzeichnet, dass die Nabe (33) des Lagertragteils an beiden axialen Enden Lager zur Lagerung der Rotorwelle enthält.

3. Elektrokleinmotor nach Anspruch 1 oder 2, dadurch gekennzeichnet, dass die zylindrische Wand des Hohlzylinders einen äusseren Mantel (34) des Lagertragteils (23) bildet und im wesentlichen die gleiche axiale Länge wie die eisenlose zylinderförmige Ringwicklung (28) aufweist.

4. Elektrokleinmotor nach einem der vorhergehenden Ansprüche, dadurch gekennzeichnet, dass ein Zentrieransatz (35) des Lagertragteils (13, 23) am Boden eines topfförmigen Aussengehäuses (2) in einer Ausnehmung (5) zentriert und mittels Arretiernasen verdrehsicher gehalten ist.

5. Elektorkleinmotor nach Anspruch 4, dadurch gekennzeichnet, dass der Zentrieransatz (35) einen Stauchrand (37) und Zentriernasen (15), die äussere Umfangsflächen aufweisen, enthält.

6. Elektrokleinmotor nach einem der Ansprüche 1 bis 3, dadurch gekennzeichnet, dass ein Aussengehäuse (2) und das Lagertragteil (13, 23) einstückig ausgebildet sind.

7. Elektrokleinmotor nach einem der vorhergehenden Ansprüche, dadurch gekennzeichnet, dass der Kleinmotor als Innenläufer-Kollektormotor ausgebildet ist.

## Revendications

1. Petit moteur électrique comportant une pièce de palier (23) d'une seule pièce, le support de palier servant lui-même, * sur un côté de l'entrefer, de retour magnétique, caractérisé en ce qu'il est réalisé en matière ferromagnétique sous la forme d'une pièce frittée qui présente la forme d'un cylindre creux ouvert sur un côté, cylindre dont le manteau externe (34) est entouré par le rotor du moteur électrique, et qui comprend, sur sa face frontale fermée, un moyeu (33) concentrique, dépassant dans la partie creuse, moyeu qui comporte, pour le montage des paliers, déjà au moins une surface de palier frittée réalisée en une seule pièce avec la pièce support de palier.

2. Petit moteur électrique suivant la revendication 1, caractérisé en ce que le moyeu (33) de la pièce support de palier comporte à ses deux extrémités axiales des paliers pour le montage sur palier de l'arbre du rotor.

3. Petit moteur électrique suivant la revendication 1 ou la revendication 2, caractérisé en ce que la paroi cylindrique du cylindre creux forme un manteau extérieur (34), et présente essentiellement la même longueur axiale que le bobinage annulaire (28) sans fer, en forme de cylindre.

4. Petit moteur électrique suivant l'une quelconque des revendications précédentes, caractérisé en ce qu'un épaulement de centrage (35) de la pièce support de palier (13, 23) est centré dans un évidement (5) sur le fond d'une carcasse extérieure (2) en forme de pot et est maintenu, sans possibilité de tourner, au moyen de broches d'arrête.

5. Petit moteur électrique suivant la revendication 4, caractérisé en ce que l'épaulement de centrage (35) comporte un bord refoulé (37) et des broches de centrage (15) qui présentent des surfaçages périphériques (38).

6. Petit moteur électrique suivant l'une quelconque des revendications 1 à 3, caractérisé en ce qu'une carcasse extérieure (2) et la pièce support de palier (13, 23) sont réalisées en une seule pièce.

7. Petit moteur électrique suivant l'une quelconque des revendications précédentes, caractérisé en ce que le petit moteur est réalisé sous la forme d'un moteur à collecteur à rotor interne.

## Claims

1. Small electric motor with a single-piece bearing support (23), the bearing support piece itself serving for magnetic feedback coupling on the one side of the air gap, characterized in that it is a sintered part made from ferromagnetic material having the shape of a hollow cylinder open at one side, the external peripheral surface (34) of which is surrounded by the rotor of the electric motor and which, at its closed front surface, has a concentric hub (33) projecting into the hollow space and containing at least one sintered bearing surface (16, 26) formed integrally with the bearing supporting part for bearing the rotor shaft (12).

2. Small electric motor according to claim 1, characterized in that the hub (33) of the bearing support part at its two axial ends comprises bearings at its two axial ends for accommodating the rotor shaft.

3. Small electric motor according to claims 1 or 2, characterized in that the cylindrical wall of the hollow cylinder defines an external jacket (34) of the bearing support part (23) and has substantially the same axial length as the coreless cylindrical ring winding (28).

4. Small electric motor according to one of the preceding claims, characterized in that a centering means (35) of the bearing support part (13, 23) is centered in a recess (5) at the bottom of a pot-shaped external casing (2) and held in its position and protected against torsion by means of retaining studs.

5. Small electric motor according to claim 4, characterized in that the centering means (35) comprises an upset edge (37) and centering studs (15), which have external peripheral surfaces (38).

6. Small electric motor according to one of the preceding claims 1 to 3, characterized in that an external casing (2) and the bearing support part (13, 23) are formed as one single piece.

7. Small electric motor according to one of the preceding claims, characterized in that the small motor is provided in the form of a commutator motor with an inner rotor.

EP 0 188 801 B1

Fig. 1

Fig. 2

Fig. 3

Fig. 4

5